# EUROPÄISCHE PATENTSCHRIFT

(11) **EP 2 523 800 B1**
(45) Veröffentlichungstag und Bekanntmachung des Hinweises auf die Patenterteilung: **23.10.2013**
(21) Anmeldenummer: 11704714.2
(22) Anmeldetag: 07.01.2011
(51) Int. Cl.: B29C 67/00, G01F 11/24, B65D 83/06

(54) **FERTIGUNGSEINRICHTUNG**
PRODUCTION APPARATUS
DISPOSITIF DE FABRICATION

(30) Priorität: 16.01.2010 DE 102010004849
(43) Veröffentlichungstag der Anmeldung: 21.11.2012
(73) Patentinhaber: Technische Universität München, 80333 München (DE)
(72) Erfinder: OTT, Michael, 86152 Augsburg (DE)
(74) Vertreter: FDST Patentanwälte
(86) Internationale Anmeldenummer: PCT/EP2011/000030
(87) Internationale Veröffentlichungsnummer: WO 2011/085946

(56) Entgegenhaltungen:
- WO-A2-2004/076101
- DE-A1- 3 036 018
- DE-A1- 19 952 998
- DE-A1-102007 029 052
- DE-C1- 19 719 597
- GB-A- 2 150 117
- US-A- 3 876 602

## Beschreibung

Die Erfindung betrifft eine Fertigungseinrichtung zur generativen Fertigung eines Pulverformteils mit den Merkmalen des Oberbegriffs gemäß Anspruch 1.

Eine Fertigungseinrichtung zur generativen Fertigung eines Pulverformteils ist beispielsweise aus der DE 196 49 865 C1 bekannt. Diese Fertigungseinrichtung weist eine plane Pulverauftragsebene sowie zwei demgegenüber abgesenkte Hubeinheiten auf. Die erste Hubeinheit trägt eine Bauplattform zum schichtweisen Aufbau des Pulverformteils. Die zweite Hubeinheit bildet einen Boden eines Pulverraums. Weiter ist eine auf der Pulverauftragsebene zwischen Pulverraum und Bauplattform verschiebbare Rakel umfasst, die über die Pulverauftragsebene ragendes Pulver des Pulverraums flächig über die Bauplattform schiebt. Eine Strahlungseinheit ist zur Erzeugung einer auf die Bauplattform richtbaren Strahlung vorgesehen. Zum Steuern bzw. zum Heben und Senken der beiden Hubeinheiten, zum Verschieben der Rakel und zum Ausrichten der Strahlung ist eine entsprechende Steuereinheit gegeben.

Vor Bauprozessbeginn mit einer derartigen Fertigungseinrichtung wird das Pulvermaterial festgelegt und der Pulverraum entsprechend gefüllt. Als ein Pulvermaterial wird beispielsweise ein metallisches Pulver von Stahl, Aluminium oder Titan verwendet. Auch ist die Verwendung von metallischen Legierungen, von Kunststoffen und von keramischen Materialien jeweils in Pulverform bekannt. Ein typisches Werkstoffpulver zur generativen Fertigung weist eine Körnung kleiner 100 µm mit einer Pulverfraktionierung von 15 µm bis 60 µm auf.

Zur Herstellung des Pulverformteils wird die Bauplattform um einen jeweils definierten Betrag (typischerweise zwischen 30 µm und 100 µm) abgesenkt und der Boden des Pulverraums nach oben gefahren, so dass Pulver über die Pulverauftragsebene hinausragt. Anschließend wird die Rakel auf der Pulverauftragsebene über den Pulverraum zur Bauplattform gefahren. Dabei schiebt die Rakel das überstehende Pulver vom Pulverraum über die Bauplattform und trägt so eine in der Höhe festgelegte Pulverschicht auf. Entsprechend liegt die Auftragshöhe gewöhnlich zwischen 30 und 100 µm.

Abschließend wird mittels der Strahlungseinheit eine geeignete Strahlung (Laser- oder Elektronenstrahl) auf die auf der Bauplattform abgelegte Schicht des aufgebrachten Pulvermaterials gerichtet und einer durch eine Bauanleitung vorgegebenen Kontur entlanggefahren. Dabei verschmilzt im Bereich der Strahlung das Pulver mit einer etwaigen Grundplatte oder mit den bereits aufgebrachten vorherigen Schichten. Als Folge baut sich Lage für Lage schließlich ein homogener Festkörper aus dem Werkstoff des Pulvermaterials auf.

Mittels der generativen Fertigungstechnik können komplexe Formteile durch schichtweises Aufbauen aus dem pulverförmigen Werkstoff hergestellt werden, wobei die Strahlung beispielsweise entsprechend dreidimensionaler CAD-Daten jeder neuen Schicht des Werkstoffs entlanggeführt wird. Insbesondere können mit dem generativen Fertigungsprozess rasch Prototypen eines neuen Werkstücks hergestellt werden. Das Verfahren ist dann unter dem Begriff "rapid prototyping" bekannt.

Auch aus der DE 199 52 998 A1 ist eine Fertigungseinrichtung der eingangs genannten Art bekannt.

Die Fertigungseinrichtungen gemäß der DE 196 49 865 C1 und der DE 199 52 998 A1 eignen sich zur Herstellung von Pulverformteilen aus dem Werkstoff des gewählten Pulvermaterials. Es ist jedoch wünschenswert, Pulverformteile generativ auch aus verschiedenen Pulverwerkstoffen aufbauen zu können, um beispielsweise konkrete Geometrien gezielt mit jeweiligen Pulvermaterialien zu versehen. Zur Zufuhr verschiedener Pulvermaterialien wird beispielsweise in der DE 10 2007 029 052 A1 ein Feld aus Pulverzufuhrdüsen vorgeschlagen, die mit wenigstens zwei Pulverarten versorgt werden. Zum Pulverauftrag auf die Bauplattform wird das Feld aus Pulverzufuhrdüsen relativ zur Pulverauftragsebene über die Bauplattform geführt. Die Pulverzufuhrdüsen sind insbesondere als Röhrchen gebildet, die jeweils mit entsprechenden Pulvervorratsbehältern für eine jeweilige Pulverart verbunden sind. Mittels Schwerkraft, unterstützt durch Vibration, sowie mittels jeder Pulverzufuhrdüse zugeordneter Absperreinrichtungen kann dann an verschiedenen Stellen auf der Pulverauftragsebene unterschiedliches Pulvermaterial abgelagert werden. Die Konstruktion und die Steuerung eines solchen Feldes von Pulverzufuhrdüsen sind jedoch aufwändig. Die Herstellungskosten sind hoch.

Methoden zum kontinuierlichen Fördern eines Pulvermaterials mittels eines Trägergases, wie sie beispielsweise aus der DE 196 08 432 A1 oder aus der DE 10 2004 021 849 A1 zum Zuführen des Pulvers für einen thermischen Spritzvorgang bekannt sind, können nicht auf den generativen Fertigungsprozess übertragen werden. Die Verwendung eines Trägergases als Transportmedium ermöglicht nur vergleichsweise unpräzise Platzierungen des verfrachteten Pulvermaterials. Eine Ablage des Pulvermaterials mit einer Ortsgenauigkeit von feiner als 100 µm ist hiermit nicht möglich. Im Übrigen würde das aufgeschichtete Pulverbett auf der Bauplattform durch den Volumenstrom des Trägergases verblasen werden.

Aus der US 6,383,446 B1 ist ein Verfahren und eine Einrichtung zum Herstellen eines Pulverformteils durch elektrisches Sintern bekannt, wobei ein automatisiertes Aufbringen von unterschiedlichen Pulvermaterialen möglich ist. Gemäß einer Ausführungsvariante umfasst ein Pulver-Befüllmechanismus eine Trägerplatte mit einer Öffnung, in die die verstellbare Bauplattform zum Pulverauftrag eingefahren wird. Über die Öffnung der Trägerplatte bewegt sich ein mit dem Pulvermaterial gefüllter Schlitten, der am Boden eine Auslassöffnung aufweist. Auf diese Weise wird das Pulvermaterial durch den Schlitten entlang der Oberfläche der Trägerplatte geschoben und durch deren Öffnung auf die Bauplattform verfrachtet. Dabei dient der innere Rand des Schlittens als eine Rakel, die beim Weiterfahren über die Öffnung der Trägerplatte überschüssiges Material abstreift. Somit wird auf der Bauplattform eine Schicht aus dem im Schlitten enthaltenen Pulvermaterial abgelegt. Die Schichtdicke des aufgebrachten Pulvermaterials ist von der Dicke der Trägerplatte und vom Hub der in die Öffnung eingefahrenen Bauplattform abhängig. Zum Aufbringen von Schichten unterschiedlicher Pulvermaterialen werden jeweils verschiedene Schlitten mechanisch an die Bauplattform verfahren, die mit unterschiedlichen Pulvermaterialien befüllt sind.

Nachteiligerweise können mit dem Verfahren und der Einrichtung gemäß der US 6,383,446 B1 jeweils nur ganze Schichten aus verschiedenen Pulvermaterialien abgelegt werden. Ein lokaler Auftrag unterschiedlicher Pulvermaterialien ist nicht möglich. Der Mechanismus zum Ankoppeln der Bauplattform an die verschiedenen Schlitten ist konstruktiv aufwändig. Die Kosten für eine entsprechende Anlage sind hoch.

Aus der DE 197 19 597 C1 ist weiter eine Pulverauftragsvorrichtung mit einer Pulverbevorratungskammer zur Aufnahme eines Pulvermaterials, mit einer hierzu feststehenden Bodenplatte, in die eine Pulverauslassbohrung eingebracht ist, mit einer Dosierplatte, die eine Anzahl von Dosierbohrungen umfasst, und mit einem gegen die Dosierplatte wirkenden Abstreifer (9) bekannt, wobei die Dosierplatte mit der wenigstens einen Dosierbohrung zwischen dem Abstreifer und der Pulverauslassbohrung hindurch bewegbar ist.

Es ist eine Aufgabe der Erfindung, eine Fertigungseinrichtung anzugeben, mit der eine möglichst einfache und kostengünstige generative Fertigung eines Pulverformteils aus lokal verschiedenen Pulvermaterialien möglich ist. Insbesondere soll es möglich sein, eine gewünschte Menge eines jeweils anderen Pulvermaterials lokal auf dem Pulverformteil zu positionieren.

Diese Aufgabe wird mit einer Fertigungseinrichtung zur generativen Fertigung eines Pulverformteils mit einer sich in einer x- und y-Richtung erstreckenden Pulverauftragsebene, mit einer zur Pulverauftragsebene in z-Richtung abgesenkten, eine Bauplattform tragenden ersten Hubeinheit, mit einer zur Pulverauftragsebene in z-Richtung abgesenkten, einen Boden eines Pulverraums bildenden zweiten Hubeinheit, mit einer auf der Pulverauftragsebene angeordneten, zwischen Pulverraum und Bauplattform verschiebbaren Rakel und mit einer Strahlungseinheit zur Erzeugung und Ausrichtung von Strahlung auf die Bauplattform erfindungsgemäß dadurch gelöst, dass wenigstens eine in x- und/oder y-Richtung mit der Pulverauslassbohrung über die Bauplattform verfahrbar Pulverauftragseinrichtung vorgesehen ist, die eine Pulverbevorratungskammer zur Aufnahme eines Pulvermaterials, eine hierzu feststehende Bodenplatte, in die eine Pulverauslassbohrung eingebracht ist, eine Dosierplatte, in die eine Anzahl von Dosierbohrungen eingebracht ist, und einen gegen die Dosierplatte wirkenden Abstreifer umfasst, wobei die Dosierplatte mit der wenigstens einen Dosierbohrung zwischen dem Abstreifer und der Pulverauslassbohrung hindurch bewegbar ist.

Durch ein Verfahren der Pulverauftragseinrichtung kann diese mit ihrer Pulverauslassbohrung an die entsprechend den vorgegebenen 3D-Daten des Pulverformteils gewünschte Position gebracht werden. Dort kann die Dosierscheibe entsprechend bewegt werden, so dass eine Dosierbohrung mit der Pulverauslassbohrung in Deckung gebracht wird. Das Pulvermaterial fließt dann in der durch die Dosierbohrung definierten Menge auf die gewünschte Position der Bauplattform. Bei mehreren Dosierbohrungen kann die Menge des lokal aufzubringenden Pulvermaterials über ein Verstellen einer Anzahl von Dosierbohrungen variiert bzw. in Einheiten der Volumina der Dosierbohrungen dosiert werden.

Zum Heben und Senken der Hubeinheiten, zum Verschieben der Rakel und zum Verfahren der oder jeder Pulverauftragseinrichtung sowie zum Bewegen der Dosierplatte ist bevorzugt eine Steuereinheit vorgesehen.

In einer zweckmäßigen Ausgestaltung sind mehrere verfahrbare Pulverauftragseinrichtungen vorgesehen. Insbesondere sind die mehreren Pulverauftragseinrichtungen mit verschiedenen Pulvermaterialien befüllt, so dass entsprechend der gewünschten Geometrie des aufzubauenden Pulverformteils an die vorgesehene Stelle jeweils das gewünschte Pulvermaterial dosiert werden kann.

Zum Aufbau des Pulverformteils ist vorgesehen, mittels der Rakeleinrichtung das Grundmaterial des Pulverformkörpers aufzubauen. Dabei wird wie bereits beschrieben Schicht für Schicht das pulverförmige Grundmaterial auf die Bauplattform aufgebracht. Anschließend wird mittels gezielter Einbringung geeigneter Strahlung das aufgebrachte Grundmaterial entsprechend den 3D-Daten des Pulverformteils verfestigt bzw. verflüssigt, wobei sich das aufgebrachte Pulver mit dem Material der jeweils darunter liegenden Schicht verbindet. Soll in einer Schicht eine gewünschte Geometrie mit anderem Pulvermaterial erzeugt werden, so wird hierzu die entsprechende Pulverauftragseinrichtung an die gewünschte Position verfahren und durch Bewegen der Dosierplatte die gewünschte Pulvermenge auf die Bauplattform bzw. auf die bereits aufgebaute Schicht des Pulverformteils dosiert. Anschließend wird diese Schicht des anderen Pulvermaterials durch Ausrichtung der entsprechenden Strahlung wiederum verfestigt und hierdurch mit der darunter liegenden Schicht verbunden. Anschließend wird weiter das Grundmaterial mittels der Rakeleinrichtung aufgebracht, wobei die erste Hubeinheit entsprechend weiter unter die Pulverauftragsebene abgesenkt wird.

Insgesamt kann somit ein Pulverformteil generativ gefertigt werden, welches an verschiedenen Positionen Geometrien unterschiedlichen Materials aufweist.

Zur Erfindung ist vorgesehen, das Pulvermaterial in eine Pulverbevorratungskammer einzufüllen, die über der Bodenplatte eine bewegliche Dosierplatte mit einer Anzahl von Dosierbohrungen aufweist. Infolge der guten Fließfähigkeit verteilt sich das eingefüllte Pulvermaterial zumindest auf einem Teil der Dosierplatte. Dabei werden insbesondere die entsprechenden Dosierbohrungen in der Dosierplatte mit dem Pulvermaterial aufgefüllt. In die Bodenplatte ist eine Pulverauslassbohrung eingebracht, mit der eine Dosierbohrung in Deckung gebracht werden kann. Wird die Dosierplatte derart bewegt, dass eine gefüllte Dosierbohrung mit der Pulverauslassbohrung in der Bodenplatte in Deckung gelangt, so kann das Pulvermaterial durch die Dosierbohrung und die Pulverauslassbohrung hindurch auf eine darunter liegende Bauplattform fließen.

Zu einer möglichst exakten Dosierung des Pulvermaterials wirkt ein Abstreifer gegen die Dosierplatte. Wird die Dosierplatte mit einer Dosierbohrung zwischen dem Abstreifer und der Pulverauslassbohrung hindurch bewegt, so räumt der Abstreifer überschüssiges Pulvermaterial auf der Dosierplatte beiseite. Es verbleibt alleine das in die Dosierbohrung eingeflossene Pulvermaterial. Das Pulvermaterial aus der Dosierbohrung kann dann bei Deckung mit der Pulverauslassbohrung auf eine darunter liegende Bauplattform fließen. Der Abstreifer kann insbesondere auch verhindern, dass Pulvermaterial aus der Pulverbevorratungskammer kontinuierlich durch Dosierbohrung und Pulverauslassbohrung fließt, wenn diese in Deckung gelangen. Es wird sichergestellt, dass nur das Volumenelement einer Dosierbohrung lokal auf die Bauplattform abgegeben wird. Zum lokalen Auftrag auf der Bauplattform wird die Pulverauftragseinrichtung mit ihrer Pulverauslassbohrung über die entsprechend gewünschte Stelle des Pulverauftrags verfahren.

Die Erfindung erlaubt es, eine örtlich und zeitlich definierte Pulvermenge aufzubringen. Die Pulverauftragseinrichtung erlaubt es insbesondere, für ein Pulverformteil vorzusehende konkrete Geometrien gezielt mit jeweiligen Pulvermaterialien zu versehen.

Die zu dosierende Pulvermenge kann über eine Variation der Dosierbohrung erreicht werden. Dabei kann sowohl der Bohrungsdurchmesser als auch die Höhe der Dosierplatte entsprechend angepasst werden. Der kleinstmögliche Bohrungsdurchmesser ist hierbei durch die größten Pulverkörner festgelegt. Da üblicherweise die Pulverfraktionierung in einem Bereich zwischen 15 µm und 50 µm variiert, sind bevorzugte Bohrungsdurchmesser zwischen 50 µm und 500 µm zu wählen. Abhängig von dem tatsächlich eingesetzten Pulvermaterial kann der Durchmesser entsprechend angepasst werden. Gleiches gilt für die Dicke der Dosierplatte. Bei einer typischen Pulverfraktionierung beträgt beispielsweise eine niedrigste Dicke der Dosierplatte bevorzugt etwa 50 µm. Diese Höhe ist ebenfalls durch die tatsächlich gegebene Pulverfraktionierung festgelegt und kann nach oben im Grunde genommen beliebig erhöht werden.

Der Abstreifer kann zur Ausübung seiner Funktion grundsätzlich beliebig ausgestaltet sein. Sofern das Pulver in der Pulverbevorratungskammer der Dosierplatte auch an der Stelle der Pulverauslassbohrung aufliegt, ist die Querschnittsfläche oder der Durchmesser des Abstreifers bevorzugt mindestens gleich der Querschnittsfläche oder dem Durchmesser der unter ihm hindurch gleitenden Dosierbohrung. Auf diese Weise wird ein kontinuierliches Hindurchfließen des in der Pulverbevorratungskammer befindlichen Pulvermaterials bei Deckung der Dosierbohrung mit der Pulverauslassbohrung verhindert. Der Abstreifer deckt dann gewissermaßen die Dosierbohrung gegen in der Pulverbevorratungskammer befindliches Pulvermaterial ab.

Für die Dosierung des Pulvermaterials wird die Dosierplatte gegenüber der Bodenplatte bewegt, um eine Dosierbohrung in Deckung mit der darunter liegenden Pulverauslassbohrung zu bringen. Grundsätzlich ist dabei jeder Verstellmechanismus, insbesondere auch ein Verschiebemechanismus vorstellbar. Für einen kompakten Aufbau ist es jedoch vorteilhaft, wenn die Dosierplatte als eine um eine Rotationsachse drehbare Dosierscheibe ausgebildet ist, wobei die wenigstens eine Dosierbohrung zur Drehachse im selben Abstand wie die Pulverauslassbohrung angeordnet ist. Durch eine einfache Drehung der Dosierscheibe kann somit die Dosierbohrung in Deckung mit der Pulverauslassbohrung gebracht werden. In einer hierzu weiter bevorzugten Ausgestaltung umfasst die Dosierscheibe eine Mehrzahl von entlang der Umfangsrichtung verteilten Dosierbohrungen. Zur Dosierung wird dann die Dosierscheibe in Schritten verstellt, die dem halben Winkelabstand zwischen zwei benachbarten Dosierbohrungen entspricht. Auf diese Weise wird zwischen einer Durchlassposition und einer Verschlussposition geschaltet. Ein hierzu geeigneter Antrieb ist insbesondere ein Schrittmotor.

Technisch lassen sich derzeit Winkelschritte von minimal 0,9° erreichen. Da bei Ansteuerung der Dosierscheibe zwischen der Durchlassposition (Dosierbohrung in Deckung mit Pulverauslassbohrung) und der Verschlussposition (Dosierbohrung nicht in Deckung mit Pulverauslassbohrung) geschaltet werden muss, ergibt sich eine mögliche Anzahl von Bohrungen von maximal 200. Die zugehörigen Bohrungsdurchmesser ergeben sich dann aus dem Durchmesser des Kreises, auf dem die Dosierbohrungen angeordnet sind.

Entsprechend dem Vorgesagten ist in einer vorteilhaften Ausgestaltung der Pulverauftragseinrichtung eine Mehrzahl von Dosierbohrungen mit einem gleichmäβigen Winkelabstand entlang des Umfangs eines Vollkreises verteilt, wobei auf demselben Umfang auch die Pulverauslassbohrung angeordnet ist. Mit einer gleichmäßigen Ansteuerung der Schrittweite zur Verdrehung der Dosierscheibe lässt sich somit eine rasche und gleichmäßige Dosierung der aufzubringenden Pulvermenge erreichen. Insbesondere können gezielt dosierte Portionen des Pulvermaterials lokal abgelegt werden, wobei die Menge des aufgebrachten Pulvermaterials über die Anzahl der abgelegten Volumina der verfahrenen Dosierbohrungen bestimmt ist.

Der Abstreifer kann einen Teil der Dosierscheibe überdecken, als Abstreifrand einer Überdeckung oder als ein separates Bauteil ausgebildet sein. In einer vorteilhaften Ausgestaltung ist der Abstreifer als ein der Pulverauslassbohrung gegenüberliegendes Bauteil ausgestaltet. Dieses Bauteil deckt dann zumindest eine Dosierbohrung ab, wenn diese mit der darunterliegenden Pulverauslassbohrung in Deckung gebracht ist. Der Abstreifer ist dann beispielsweise als ein Abstreifdorn oder als ein Zylinder ausgebildet, der der Dosierplatte beispielsweise aufliegt. Die kleine Auflagefläche vermindert hierbei die Reibung während der Bewegung der Dosierplatte.

In einer kompakten Ausführungsvariante umfasst die Pulverauftragseinrichtung bevorzugt in Modulbauweise eine Deckeleinheit, eine Bodeneinheit und eine dazwischen angeordnete Bevorratungseinheit. Wenigstens die Deckeleinheit und die Bevorratungseinheit umfassen eine zur Rotationsachse konzentrische zentrale Ausnehmung, wobei die zentrale Ausnehmung der Bevorratungseinheit einen ersten Bohrungsraum aufweist, in dem Bohrungsraum die Dosierscheibe drehbar gelagert ist. In der Bevorratungseinheit ist die Pulverbevorratungskammer ausgebildet. Diese ist beispielsweise mit einem Zufuhrkanal in der Deckeleinheit verbunden, und über diesen Zufuhrkanal mit dem Pulvermaterial befüllbar. Eine mit der Dosierscheibe verbundene Antriebseinheit durchdringt die zentralen Ausnehmungen der Deckeleinheit und der Bevorratungseinheit. In der Bodeneinheit ist die Pulverauslassbohrung eingebracht.

Die Baueinheiten sind hierbei beispielsweise miteinander verschraubt, verrastet, form- und/oder kraftschlüssig miteinander und insbesondere lösbar verbunden. Bei einer lösbaren Verbindung zwischen den Baueinheiten wird es möglich, die in die Bevorratungseinheit eingesetzte Dosierscheibe leicht auszutauschen. Somit ist es möglich, in einfacher Art und Weise die Pulverauftragseinrichtung für verschieden große Dosiermengen umzubauen oder mehrere Pulverbevorratungseinheiten vorzusehen, die jeweils eine unterschiedliche Menge an Pulvermaterial dosieren. Jedenfalls lässt es eine solche modulare Bauweise zu, die Pulverbevorratungseinheit jeweils den spezifisch vorhandenen Bedingungen und gewünschten Dosiermengen entsprechend anzupassen.

Dadurch, dass eine Antriebseinheit zentral in die Pulverauftragseinrichtung eingesetzt ist, wird insgesamt eine äußerst kompakte und einfach zu handhabende Pulverauftragseinrichtung geschaffen. Die Antriebseinheit kann gegebenenfalls über eine entsprechende Getriebestufe unmittelbar mit der Dosierscheibe verbunden sein.

Für einen separat ausgebildeten Abstreifer umfasst die Bevorratungseinheit als Pulverbevorratungskammer einen zweiten Bohrungsraum, wobei zwischen dem ersten und dem zweiten Bohrungsraum eine radial nach innen gerichtete Wandung gebildet, in der der Abstreifer aufgenommen ist. Dabei bleibt der im Wesentlichen rotationssymmetrische Bau der einzelnen Einheiten der Pulverauftragseinrichtung erhalten. Dies erlaubt eine einfache und somit kostengünstige Fertigung.

In einer anderen hierzu alternativen, weiter bevorzugten Ausgestaltung umfasst die Bevorratungseinheit als Pulverbevorratungskammer einen auf einen Abschnitt der Dosierscheibe mündenden Trichterraum, wobei eine Kante des Trichterraums als Abstreifer ausgebildet ist und gegen die Dosierscheibe wirkt. Insbesondere erstreckt sich der Trichterraum lediglich über ein Teilsegment der Dosierscheibe. In der Bevorratungseinheit oder der Deckeleinheit ist weiter bevorzugt ein Bevorratungsraum eingebracht, der dem Trichterraum aufgesetzt ist. Die Dosierscheibe durchwandert mit ihren Dosierbohrungen den gefüllten Trichterraum, wobei sich die Dosierbohrungen auffüllen. Am Abstreifer, also am Ende des Trichterraums, bleibt das auf der Dosierscheibe angehäufte Pulvermaterial zurück. Lediglich die befüllten Dosierbohrungen wandern unter den Abstreifer hindurch, ehe sie mit der Pulverauslassbohrung in Deckung geraten. Mit anderen Worten ist die Pulverauslassbohrung bezüglich der Drehrichtung der Dosierscheibe hinter der als Abstreifer ausgebildeten Kante des Trichterraums angeordnet. Auf diese Weise ist nur derjenige Teil der Dosierscheibe, die sich gerade im Trichterraum befindet, mit Pulvermaterial beladen. Insgesamt ergibt sich somit eine geringere Reibung bei der Rotation der Dosierscheibe, so dass ein leichtgängigeres System geschaffen werden kann.

Zweckmäßigerweise sind die mit dem Pulvermaterial in Berührung kommenden Kanten des Abstreifers gehärtet. Bevorzugt sind die Kanten dabei mit einer Beschichtung hoher Härte versehen. Eine solche Beschichtung kann beispielsweise eine diamantähnliche Schicht auf Basis amorphen Kohlenstoffs sein, die mittels PVD (physical vapour deposition) oder CVD (chemical vapour deposition) aufgebracht ist. Auf diese Weise ist sichergestellt, dass die Kanten des Abstreifers härter sind als jedes Pulvermaterial.

In einer vorteilhaften Ausgestaltung ist die Pulverauslassbohrung als eine konische Bohrung mit ihrem größeren Durchmesser auf der der Dosierplatte zugewandten Seite ausgebildet. Über eine solche konische Bohrung wird das aus der Dosierplatte austretende Pulvermaterial auf die darunter liegende Bauplattform fokussiert. Um das aus der Dosierbohrung austretende Pulvermaterial aufzufangen und auf einen kleineren Querschnitt zu lenken, ist bevorzugt der große Konusdurchmesser größer als der Durchmesser der Dosierbohrung gewählt. Hierdurch wird zudem ein reibungsloser Pulverfluss ermöglicht. Die Genauigkeit der Pulvereinbringung kann über die Wahl des kleinen Konusdurchmessers gewählt werden. Dabei wird die Fokussiergenauigkeit umso feiner je kleiner der kleine Konusdurchmesser gewählt ist.

Weiter bevorzugt ist die Pulverauslassbohrung unter einem Winkel zur Bodenplatte eingebracht. Mit einem solchen Winkel zur Bodenplatte kann die Pulververteilung auf der darunter liegenden Bauplattform beeinflusst werden. Bei einem Standardwinkel von 90° ergibt sich ein gleichmäßiger Pulverauftrag. Bei einem hierzu geneigten Winkel ergibt sich eine entsprechend elliptisch veränderte Pulververteilung.

Ausführungsbeispiele der Erfindung werden anhand einer Zeichnung näher erläutert. Dabei zeigen:
- Fig. 1: schematisch eine Pulverauftragseinrichtung zum örtlich und zeitlich dosierten Aufbringen eines Pulvermaterials,
- Fig. 2: eine Veranschaulichung des Auftragsmechanismus entsprechend Fig. 1,
- Fig. 3: zwei alternative Möglichkeiten zur Ausgestaltung einer Pulverauslassbohrung,
- Fig. 4: in einem Querschnitt eine bevorzugte Ausführungsvariante einer Pulverauftragseinrichtung,
- Fig. 5: in schematischer Darstellung eine Fertigungseinrichtung zur generativen Fertigung eines Pulverformteils,
- Fig. 6: in einer teilweise transparenten Darstellung eine weitere Ausführungsvariante einer Pulverauftragseinrichtung und
- Fig. 7: einen vergrößert dargestellten Teilaspekt der Pulverauftragseinrichtung aus Fig. 6.

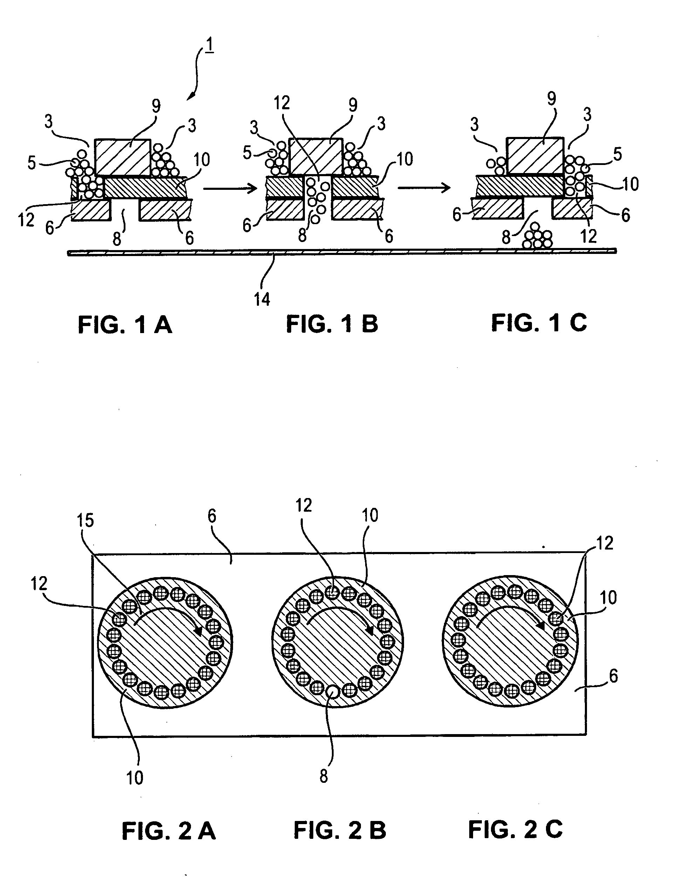

Aus Fig. 1 wird schematisch das Funktionsprinzip einer Pulverauftragseinrichtung 1 zum dosierten und lokalen Aufbringen einer spezifischen Pulvermenge ersichtlich. Die Pulverauftragseinrichtung 1 umfasst hierbei als wesentliche Bauteile eine Pulverbevorratungskammer 3, die mit Pulvermaterial 5 gefüllt ist, eine hierzu feststehende Bodenplatte 6, in der eine Pulverauslassbohrung 8 eingebracht ist, einen Abstreifer 9 und eine bewegliche Dosierplatte 10, die eine Dosierbohrung 12 aufweist.

Zum dosierten lokalen Aufbringen einer spezifischen Pulvermenge wird die Pulverauftragseinrichtung 1 über die gewünschte Stelle zum Pulverauftrag auf eine Bauebene 14 gefahren. Die Fig. 1a) bis 1c) zeigen hierbei verschiedene Stadien zum Aufbringen der gewünschten Pulvermenge.

Gemäß Fig. 1a) befindet sich die Pulverauftragseinrichtung 1 in einem geschlossenen Zustand. Das in die Pulverbevorratungskammer 3 eingebrachte Pulvermaterial 5 ist in die zur Pulverbevorratungskammer 3 geöffnete Dosierbohrung 12 in der Dosierplatte 10 geflossen und füllt deren Volumen aus. Die Dosierbohrung 12 ist nicht in Deckung zur Pulverauslassbohrung 8. Es wird kein Pulvermaterial auf die Bauebene 14 aufgebracht. Im verschlossenen Zustand kann die Pulverauftragseinrichtung 1 an die gewünschte Ablagestelle des Pulvermaterials 5 verfahren werden.

Gemäß Fig. 1 b) befindet sich die Pulverauftragseinrichtung 1 in einem geöffneten Zustand. In diesem Zustand ist die Dosierplatte 10 gegenüber dem Abstreifer 9 und der Bodenplatte 6 verfahren worden. Die Dosierbohrung 12 befindet sich in Deckung mit der darunter liegenden Pulverauslassbohrung 8 in der Bodenplatte. Während des Verfahrens der Dosierplatte 10 sorgt der Abstreifer 9 dafür, dass überschüssiges Pulvermaterial 5 oberhalb der Dosierbohrung 12 weggeschoben wird. Im geöffneten Zustand deckt der Abstreifer 9 die Dosierbohrung 12 ab. Auf diese Weise kann nur das der Dosierbohrung 12 entsprechende Volumen an Pulvermaterial 5 durch die Pulverauslassbohrung 8 auf die Bauebene 14 gelangen. Es wird eine genau dem Volumen der Dosierbohrung 12 entsprechende Menge an Pulvermaterial an die gewünschte Position auf der Bauebene 14 abgesetzt. Die Dosierbohrung 12 gibt das kleinste Dosiervolumen an Pulvermaterial 5 vor.

In Fig. 1c) ist der Zustand der Pulverauftragseinrichtung 1 dargestellt, in der die Dosierplatte 10 weiter verfahren ist und wiederum ein geschlossener Zustand vorliegt. Die Dosierbohrung 12 befindet sich nun wiederum seitlich zur Pulverauslassbohrung 8 und seitlich des Abstreifers 9. Aus der Pulverbevorratungskammer 3 fließt nun wieder Pulvermaterial 5 in die Dosierbohrung 12 hinein. Auf der Bauebene 14 ist das exakt dosierte Pulvermaterial 5 abgelegt.

Aus Fig. 2 wird das Funktionsprinzip einer Pulverauftragseinrichtung 1 gemäß Fig. 1 nochmals ersichtlich. Dabei ist die in Fig. 1 erkennbare Dosierplatte 10 als eine Dosierscheibe 15 ausgebildet. Die Fig. 2a) bis 2c) entsprechen dabei den Zuständen der Pulverauftragseinrichtung 1 gemäß den Fig. 1 a) bis 1 c).

Die Dosierscheibe 15 weist mit festem radialem Abstand eine Anzahl von Dosierbohrungen 12 auf, die in gleichem Winkelabstand in Umfangsrichtung verteilt sind. Im gleichen radialen Abstand zur Rotationsachse der Dosierscheibe 15 ist in der Bodenplatte 6 die Pulverauslassbohrung 8 angeordnet.

Gemäß Fig. 2a) ist die Dosierscheibe 15 so gedreht, dass keine der Dosierbohrungen 12 in Deckung mit der darunter angeordneten Pulverauslassbohrung 8 liegt. Im geöffneten Zustand gemäß Fig. 2b) ist die Dosierscheibe 15 so gedreht, dass sich eine der Dosierbohrungen 12 in Deckung mit der Pulverauslassbohrung 8 befindet. In diesem Zustand wird Pulvermaterial 5 aus der Dosierbohrung 12 über die Pulverauslassbohrung 8 auf die Bauebene 15 verfrachtet.

Gemäß Fig. 2c) ist die Dosierscheibe 15 weitergedreht. Keine der Dosierbohrungen 12 befindet sich in Deckung mit der Pulverauslassbohrung 8.

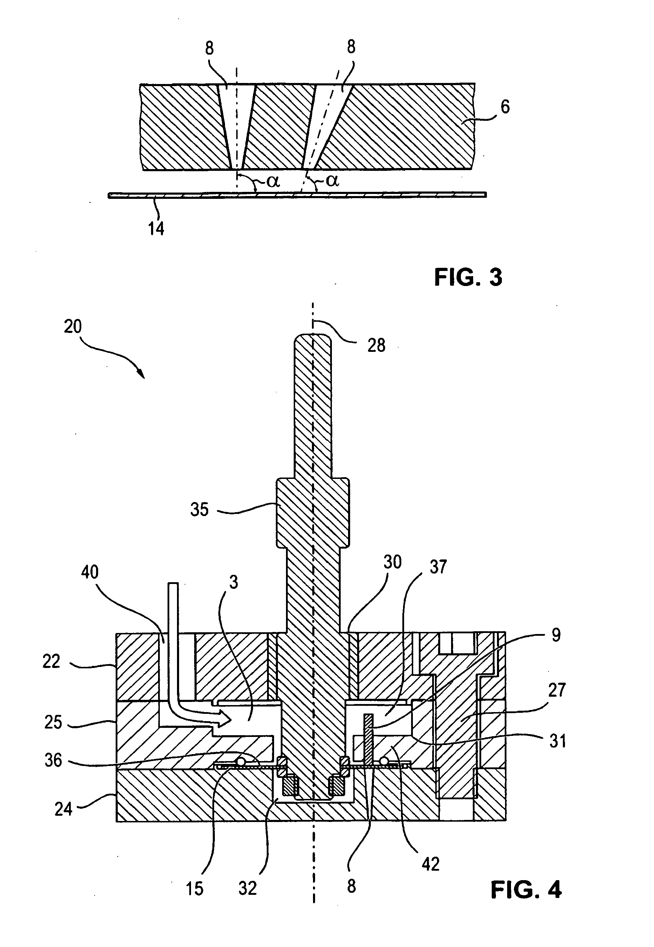

Um eine Fokussierung des Pulvermaterials 5 auf der Bauebene 14 gemäß Fig. 1 zu erzielen, ist die Pulverauslassbohrung 8 in die Bodenplatte 6 konisch eingebracht. Dies wird aus Fig. 3 ersichtlich. Der größere Konusdurchmesser befindet sich auf der der Dosierptatte zugewandten Seite (vorliegend oben). Bei einem Standardwinkel der Pulverauslassbohrung 8 zur Bodenplatte 6 von α = 90° (linke Darstellung in Fig. 3) wird sich das ausfließende Pulvermaterial aufgrund der konischen Pulverauslassbohrung 8 auf eine kleinere Stelle auf der Bauebene 14 verteilen. Die Verteilung ist hierbei jedoch nach allen Richtungen gleichmäßig.

Bei einer schrägen Einbringung der Pulverauslassbohrung 8 (rechte Darstellung in Fig. 3) wird sich das Pulvermaterial eher elliptisch um den Auftreffpunkt herum auf der Bauebene 14 gruppieren. Durch Einstellung des Winkels α kann somit die Verteilung des aufgetragenen Pulvermaterials beeinflusst werden.

In Fig. 4 ist in einem Querschnitt eine im Wesentlichen rotationssymmetrisch aufgebaute Pulverauftragseinrichtung 20 dargestellt. Die Pulverauftragseinrichtung 20 ist modular aufgebaut. Sie umfasst hierbei eine Deckeleinheit 22, eine Bodeneinheit 24 und eine dazwischen angeordnete Bevorratungseinheit 25. Die einzelnen Baueinheiten 22, 24, 25 sind über eine Verschraubung 27 lösbar miteinander verbunden. Die Baueinheiten 22, 24, 25 sind im Wesentlichen rotationssymmetrisch (scheibenförmig) ausgebildet. Die entsprechende Rotationsachse 28 ist eingezeichnet.

Jede der Baueinheiten 22, 24, 25 weist jeweils eine zentrale Ausnehmung 30, 31, 32 auf. In diese Ausnehmungen 30, 31, 32 ist eine zentrale Antriebseinheit 35 eingesetzt, die vorliegend einen Schrittmotor mit oder ohne Getriebestufe umfasst. Die Antriebseinheit 35 ist abtriebsseitig mit der Dosierscheibe 15 verbunden, die in die zentrale Ausnehmung 31 der Bevorratungseinheit 25 drehbar eingesetzt ist. Die zentrale Ausnehmung 31 der Bevorratungseinheit 25 umfasst einen ersten Bohrungsraum 36 und einen zweiten Bohrungsraum 37, zwischen den eine Wandung 42 gebildet ist. Die Wandung 42 dient der Aufnahme eines gegen die Dosierscheibe 15 wirkenden Abstreifers 9. Unmittelbar unterhalb des Abstreifers 9 befindet sich die Pulverauslassbohrung 8, die in die Bodeneinheit 24 eingebracht ist. Zwischen dem Abstreifer 9 und der Pulverauslassbohrung 8 ist die Dosierscheibe 15 mit ihren Dosierbohrungen 12 entsprechend Fig. 2 hindurch verfahrbar.

Über einen Zufuhrkanal 40 in der Deckeleinheit 22 wird die zentrale Ausnehmung 31 der Bevorratungseinheit 25 mit Pulvermaterial befüllt. Die zentrale Ausnehmung 31 der Bevorratungseinheit 25 entspricht somit der Pulverbevorratungskammer 3 entsprechend Fig. 1.

Durch eine Ansteuerung der Antriebseinheit 28 kann die Dosierscheibe 15 entsprechend Fig. 2 mit ihren jeweiligen Dosierbohrungen 12 zwischen einem verschlossenen und einem geöffneten Zustand verfahren werden. Im geöffneten Zustand (siehe Fig. 2b)) befindet sich entsprechend Fig. 4 eine Dosierbohrung 12 der Dosierscheibe 15 exakt zwischen Abstreifer 9 und Pulverauslassbohrung 8. Das über die Dosierbohrung 12 mitgenommene Volumen an Pulvermaterial 5 fließt über die Pulverauslassbohrung 8 auf die sich darunter befindende Stelle. Zum Positionieren und Dosieren des Pulvermaterials 5 wird die Pulverauftragseinrichtung 20 über einen nicht gezeigten Manipulator oder sonstigen Verstellmechanismus an die gewünschte Position verfahren.

Bei der Befüllung der Pulverbevorratungskammer 3 über den Zufuhrkanal 40 fließt das Pulvermaterial 5 über die Bohrungsräume 36 und 37 auf die Dosierscheibe 15, wo es sich aufgrund des Fließverhaltens gleichmäßig verteilt. Insbesondere werden hierbei die zahlreichen Dosierbohrungen 15 gleichmäßig mit Pulvermaterial 5 aufgefüllt.

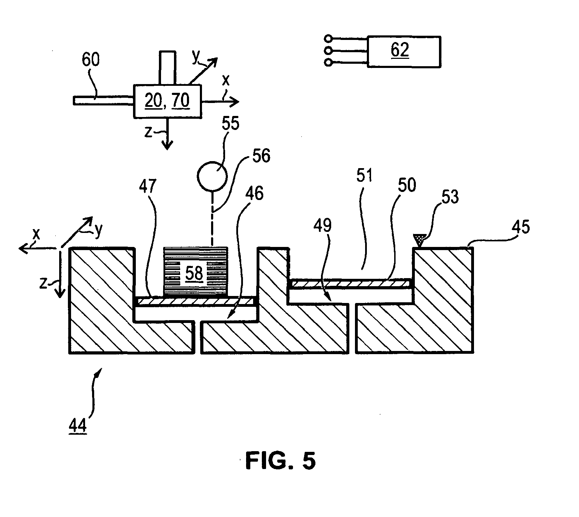

In Fig. 5 ist schematisch eine Fertigungseinrichtung 44 zur generativen Fertigung eines Pulverformteils 58 dargestellt. Die Fertigungseinrichtung 44 umfasst eine sich in einer x- und y-Richtung erstreckende Pulverauftragsebene 45. Gegenüber dieser Pulverauftragsebene 45 sind eine erste Hubeinheit 46, die eine Bauplattform 47 trägt, und eine zweite Hubeinheit 49, die den Boden 50 eines Pulverraums 51 bildet, abgesenkt. Die Hubeinheiten 46 und 49 sind steuerbar heb- und senkbar.

Auf der Pulverauftragsebene 45 ist eine Rakel 53 vorgesehen, die wenigstens die Breite des Pulverraums 51 bzw. der Bauplattform 47 aufweist. Die Rakel 53 ist über den Pulverraum 51 und über die Bauplattform 47 entlang der Pulverauftragsebene 45 verfahrbar. Vorliegend geschieht dies in x-Richtung.

Weiter weist die Fertigungseinrichtung 44 eine Strahlungseinheit 55 auf, die zum Erzeugen und Ausrichten einer Strahlung 56 auf das auf der Bauplattform 47 heranwachsende Pulverformteil 58 ausgebildet ist.

Zum schichtweisen Aufbau des Pulverformteils 58 wird der Boden 50 des mit geeignetem Pulvermaterial gefüllten Pulverraums 51 mittels der zweiten Hubeinheit 49 angehoben, so dass Pulvermaterial über die Pulverauftragsebene 45 hinausragt. Parallel dazu wird die erste Hubeinheit 46 mit der Bauplattform 47 und den bereits gebildeten Teilen des Pulverformteils 58 gegenüber der Pulverauftragsebene 45 abgesenkt. Dabei wird die erste Hubeinheit 46 gegenüber der Pulverauftragsebene 45 so weit abgesenkt, wie es zum Auftrag einer gewünschten Schichtdicke des Pulvermaterials notwendig ist.

Anschließend wird die Rakel 53 in x-Richtung über den Pulverraum 51 und über die Bauplattform 47 verfahren. Dabei nimmt sie das über die Pulverauftragsebene 43 hinausragende Pulvermaterial mit und verteilt dies gleichmäßig über die abgesenkte Oberfläche des bereits gebildeten Pulverformteils 58. Eine neue Schicht des Pulvermatrials zum weiteren Aufbau des Pulverformteils 58 ist aufgetragen. Anschließend wird durch entsprechende Ansteuerung der Strahlungseinheit 55 entsprechend vorgegebener 3D-Daten Strahlung entlang einer bestimmten Kontur auf die Oberfläche des Pulverformteils 58 gerichtet bzw. geführt. Entlang der Kontur wird das Pulvermaterial aufgeschmolzen und verbindet sich hierbei mit dem Material der darunter liegenden Schicht. Es wird das Pulverformteil 58 entsprechend den 3D-Daten schichtweise aufgebaut.

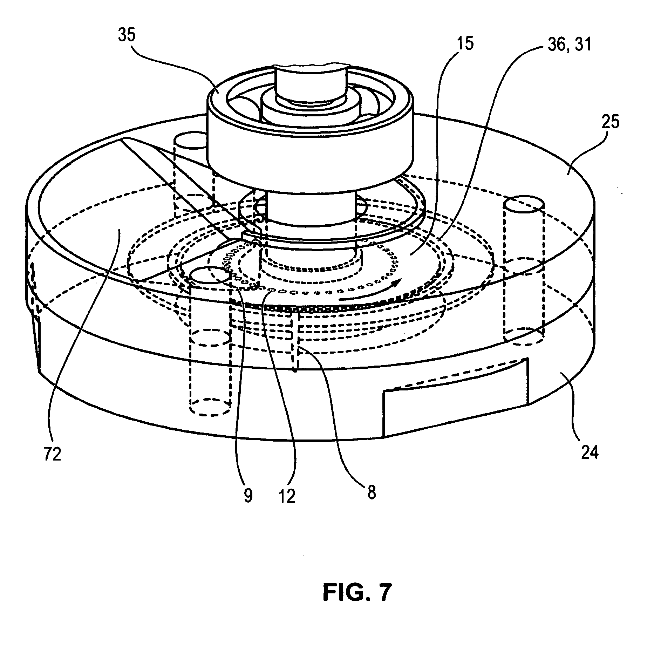

Ist eine Geometrie des Pulverformteils 58 vorgesehen, an der ein Pulvermaterial anderer Art aufzubringen ist, so ist hierbei eine in x-, y- und z-Richtung verfahrbare Pulverauftragseinrichtung 20 bzw. 70 entsprechend den Fig. 4 bzw. 7 vorgesehen. Diese kann mittels eines geeigneten Manipulators 60 in den drei Raumrichtungen positioniert werden. Insbesondere wird die Pulverauftragseinrichtung 20, 70 mit der Pulverauslassbohrung 8 gemäß Fig. 4 dazu an die entsprechend gewünschte Position auf dem bereits gebildeten Pulverformteil 58 gefahren. Anschließend wird über ein Bewegen der Dosierplatte eine gewünschte Menge eines anderen Pulvermaterials lokal auf dem Pulverformteil 58 positioniert.

Anschließend wird das aufgebrachte andere Pulvermaterial durch entsprechende Bestrahlung entlang einer vorgegebenen Kontur wiederum verfestigt, wobei es sich mit dem Material der darunter liegenden Schicht verbindet. Danach wird die erste Hubeinheit 46 um eine weitere Schicht abgesenkt.

Danach wird die Schicht mit der bereits verfestigten lokalen Geometrie des anderen Pulvermaterials mit dem Pulver des Grundmaterials aus dem Pulverraum 51 aufgefüllt oder weitere Schichten hieraus aufgetragen. Hierzu wird die Rakel 53 wie bereits beschrieben erneut über die Bauplattform 47 verfahren, die entsprechend abgesenkt wurde. Vorher wurde die zweite Hubeinheit 49 wieder entsprechend gegenüber der Pulverauftragsebene 45 angehoben.

Zum Heben und Senken der Hubeinheiten 46, 49, zum Verschieben der Rakel 53, zum Verfahren der oder jeder Pulverauftragseinrichtung 20, 70 sowie zum Bewegen der Dosierplatte 10 ist bevorzugt eine entsprechend angeschlossene Steuereinheit 62 vorgesehen.

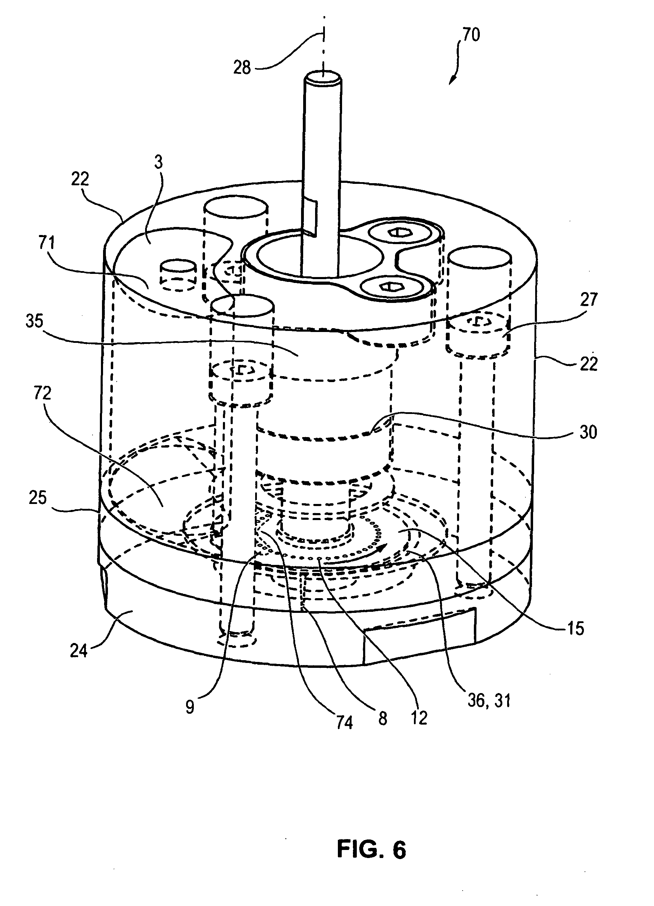

Fig. 6 zeigt in einer teilweise transparenten Darstellung eine alternative Ausführungsform einer ebenfalls im Wesentlichen rotationssymmetrisch aufgebauten Pulverauftragseinrichtung 70. Auch diese Pulverauftragseinrichtung 70 ist modular aufgebaut und umfasst eine Deckeleinheit 22, eine Bodeneinheit 24 und eine dazwischen angeordnete Bevorratungseinheit 25. Die einzelnen Baueinheiten 22, 24, 25 sind über Verschraubungen 27 lösbar miteinander verbunden.

Sowohl die Deckeleinheit 22 als auch die Bevorratungseinheit 25 weisen jeweils eine zentrale Ausnehmung 30 bzw. 31 auf. In diese Ausnehmungen 30, 31 ist eine zentrale Antriebseinheit 35 eingesetzt, die auch in dieser Ausführungsvariante als ein Schrittmotor mit oder ohne eine Getriebestufe ausgebildet ist.

Die zentrale Ausnehmung 31 der Bevorratungseinheit 25 umfasst einen ersten Bohrungsraum 36, in dem eine Dosierscheibe 15 um die Zentralachse 28 drehbar gelagert eingesetzt ist. Zur Dosierung weist die Dosierscheibe 15 eine Anzahl von entlang des Umfangs eines Vollkreises gleich verteilter Dosierbohrungen 12 auf. Die Dosierscheibe 15 ist mit der Abtriebsseite der Antriebseinheit 35 verbunden. In der Bodeneinheit 24 ist eine Pulverauslassbohrung 8 eingebracht, mit der die Dosierbohrungen 12 der Dosierscheibe 15 bei Drehung in Deckung gebracht werden können. Gelangt eine der mit Pulvermaterial befüllten Dosierbohrungen 12 in Deckung mit der darunter liegenden Pulverauslassbohrung 8 der Bodeneinheit 24, so entleert sich die jeweilige Dosierbohrung 12 über die Pulverauslassbohrung 8 auf die darunter befindliche Stelle.

Zur Bevorratung von Pulvermaterial ist in einem Abschnitt der Deckeleinheit 22 ein Hohlraum 71 eingebracht, der den Bevorratungsraum einer Pulverbevorratungskammer 3 bildet. Der Boden des Hohlraums 71 wird durch einen Trichterraum 72 gebildet, der in einen Abschnitt der Bevorratungseinheit 25 eingebracht ist. Der Trichterraum 72 stellt hierbei den Zuführraum der Pulverbevorratungskammer 3 dar.

Zum Aufbringen von Pulvermaterial aus der Pulverbevorratungskammer 3 auf die Dosierscheibe 15 und somit in die Dosierbohrungen 12, mündet der Trichterraum 72 nach innen auf einen Abschnitt der Dosierscheibe 15. Bei Drehung der Dosierscheibe 15 durchläuft diese den Trichterraum 72, wobei Pulvermaterial in die durchlaufenden Dosierbohrungen 12 fließt. Die in Drehrichtung der Dosierscheibe 15 liegende Austrittsseite des Trichterraums 72 ist als eine gegen die Dosierscheibe 15 gerichtete Kante ausgebildet und wirkt insofern als ein Abstreifer 9, der auf der Oberfläche der Dosierscheibe 15 liegendes Pulvermaterial zurückhält. Bei Drehung in der durch einen Pfeil dargestellten Richtung taucht die Dosierscheibe 15 am Abstreifer 9 aus dem offenen, mit Pulvermaterial gefüllten Trichterraum 72 in den Bohrungsraum 36 der Bevorratungseinheit 25 ab, wobei überschüssiges, an der Oberfläche der Dosierscheibe 15 liegendes Pulvermaterial im Trichterraum 72 zurück bleibt. Bohrung für Bohrung wird somit nur diejenige Menge an Pulvermaterial in den Bohrungsraum 36 der Bevorratungseinheit 25 hinein transportiert, welche dem Volumen der entsprechenden Dosierbohrungen 15 entspricht. Gelangt bei Weiterdrehung eine befüllte Dosierbohrung 15 in Deckung mit der in der Bodeneinheit 24 darunter angebrachten Pulverauslassbohrung 8, so wird eine exakt dosierte Menge an Pulvermaterial an die unter der Pulverauslassbohrung 8 befindliche Stelle abgeladen.

Dadurch, dass nur ein Abschnitt der Dosierscheibe 15 mit Pulvermaterial beladen ist, ist die Reibung bei Antrieb verringert. Die Dosierscheibe 15 trägt weniger Last. Um die als Abstreifer 9 wirkende Kante des Trichterraums 72 vor Verschleiß durch Abrieb zu schützen, ist diese mit einer diamantähnlichen Schicht aus amorphem Kohlenstoff beschichtet.

In Fig. 7 sind wiederum in einer teilweise transparenten Darstellung die Bevorratungseinheit 25 und die Bodeneinheit 24 aus Fig. 6 in einer vergrößerten Darstellung gezeigt. Man erkennt nun den nach innen auf einen Abschnitt der Dosierscheibe 15 mündenden Trichterraum 72. Auch die als Abstreifer 9 wirkende Kante des Trichterraums 72, an der die Dosierscheibe 15 in den Bohrungsraum 36 der Bevorratungseinheit 25 abtaucht, ist gut sichtbar. Über die Pulverauslassbohrung 8, die in die Bodeneinheit 24 eingebracht wird, erfolgt die jeweilige Leerung der darüber liegenden Dosierbohrung 12.

### Bezugszeichenliste

- 1: Pulverauftragseinrichtung
- 3: Pulverbevorratungskammer
- 5: Pulvermaterial
- 6: Bodenplatte
- 8: Pulverauslassbohrung
- 9: Abstreifer
- 10: Dosierplatte
- 12: Dosierbohrung
- 14: Bauebene
- 15: Dosierscheibe
- 20: Pulverauftragseinrichtung
- 22: Deckeleinheit
- 24: Bodeneinheit
- 25: Bevorratungseinheit
- 27: Verschraubung
- 28: Rotationsachse
- 30: Ausnehmung
- 31: Ausnehmung
- 32: Ausnehmung
- 35: Antriebseinheit
- 36: erster Bohrungsraum
- 37: zweiter Bohrungsraum
- 40: Zufuhrkanal
- 42: Wandung
- 44: Fertigungseinrichtung
- 45: Pulverauftragsebene
- 46: erste Hubeinheit
- 47: Bauplattform
- 49: zweite Hubeinheit
- 50: Boden
- 51: Pulverraum
- 53: Rakel
- 55: Strahlungseinheit
- 56: Strahlung
- 58: Pulverformteil
- 60: Manipulator
- 62: Steuereinheit
- 70: Pulverauftragseinrichtung
- 71: Hohlraum
- 72: Trichterraum
- 74: Abschnitt Dosierscheibe

## Patentansprüche

1. Fertigungseinrichtung (44) zur generativen Fertigung eines Pulverformteils mit einer sich in einer x- und y-Richtung erstreckenden Pulverauftragsebene (45), mit einer zur Pulverauftragsebene (45) in z-Richtung abgesenkten, eine Bauplattform (47) tragenden ersten Hubeinheit (46), mit einer zur Pulverauftragsebene (45) in z-Richtung abgesenkten, einen Boden (50) eines Pulverraums (51) bildenden zweiten Hubeinheit (49), mit einer auf der Pulverauftragsebene (45) angeordneten, zwischen Pulverraum (51) und Bauplattform (47) verschiebbaren Rakel (53) und mit einer Strahlungseinheit (55) zur Erzeugung und Ausrichtung von Strahlung (56) auf die Bauplattform (47),
**dadurch gekennzeichnet,**
**dass** wenigstens eine in x- und/oder y-Richtung mit der Pulverauslassbohrung (8) über die Bauplattform (47) verfahrbare Pulverauftragseinrichtung (1, 20, 70) mit einer Pulverbevorratungskammer (3) zur Aufnahme eines Pulvermaterials (5), mit einer hierzu feststehenden Bodenplatte (6), in die eine Pulverauslassbohrung (8) eingebracht ist, mit einer Dosierplatte (10), die eine Anzahl von Dosierbohrungen (12) umfasst, und mit einem gegen die Dosierplatte (10) wirkenden Abstreifer (9) vorgesehen ist, wobei die Dosierplatte (10) mit der wenigstens einen Dosierbohrung (12) zwischen dem Abstreifer (9) und der Pulverauslassbohrung (8) hindurch bewegbar ist.

2. Fertigungseinrichtung (44) nach Anspruch 1,
wobei die Dosierplatte (10) als eine um eine Rotationsachse (28) drehbare Dosierscheibe (15) ausgebildet ist, die eine Mehrzahl von entlang der Umfangsrichtung verteilten Dosierbohrungen (12) umfasst.

3. Fertigungseinrichtung (44) nach Anspruch 2,
wobei die Dosierbohrungen (12) mit einem gleichmäßigen Winkelabstand entlang des Umfangs eines Vollkreises verteilt sind, und wobei auf diesem Umfang auch die Pulverauslassbohrung (8) angeordnet ist.

4. Fertigungseinrichtung (44) nach einem der vorhergehenden Ansprüche,
wobei der Abstreifer (9) der Pulverauslassbohrung (8) gegenüberliegend angeordnet ist.

5. Fertigungseinrichtung (44) nach einem der Ansprüche 2 bis 4,
wobei in Modulbauweise eine Deckeleinheit (22), eine Bodeneinheit (24) und eine dazwischen angeordnete Bevorratungseinheit (25) vorgesehen sind, wobei zumindest die Deckeleinheit (22) und die Bevorratungseinheit jeweils eine zentrale Ausnehmung (30, 31) umfassen, wobei die zentrale Ausnehmung (31) der Bevorratungseinheit (25) einen ersten Bohrungsraum (36) umfasst, in dem die Dosierscheibe (10) drehbar gelagert ist, wobei in der Bevorratungseinheit (25) die Pulverbevorratungskammer (3) ausgebildet ist, wobei eine mit der Dosierscheibe (10) verbundene Antriebseinheit (35) die zentralen Ausnehmungen (30, 31, 32) der Deckeleinheit (22) und der Bevorratungseinheit (25) durchdringt, und wobei in der Bodeneinheit (24) die Pulverauslassbohrung (8) eingebracht ist.

6. Fertigungseinrichtung (44) nach Anspruch 5,
wobei die Bevorratungseinheit (25) als Pulverbevorratungskammer (3) einen auf einen Abschnitt (74) der Dosierscheibe (10) mündenden Trichterraum (72) umfasst, und wobei eine Kante des Trichterraums (72) als Abstreifer (9) ausgebildet ist und gegen die Dosierscheibe (10) wirkt.

7. Fertigungseinrichtung (44) nach Anspruch 5,
wobei die Bevorratungseinheit (25) als Pulverbevorratungskammer (3) einen zweiten Bohrungsraum (37) umfasst, und wobei zwischen dem ersten und dem zweiten Bohrungsraum (36, 37) eine radial nach innen gerichtete Wandung (42) gebildet ist, in der der Abstreifer (9) aufgenommen ist.

8. Fertigungseinrichtung (44) nach einem der vorhergehenden Ansprüche, wobei die Dosierbohrungen (12) einen Durchmesser zwischen 50 und 500 µm aufweisen.

9. Fertigungseinrichtung (44) nach einem der vorhergehenden Ansprüche, wobei die Dicke der Dosierplatte (10) größer als 50 µm ist.

10. Fertigungseinrichtung (44) nach einem der vorhergehenden Ansprüche, wobei die Pulverauslassbohrung (8) als eine konische Bohrung mit ihrem größeren Durchmesser auf der der Dosierplatte (10) zugewandten Seite ausgebildet ist.

11. Fertigungseinrichtung (44) nach einem der vorhergehenden Ansprüche, wobei die Pulverauslassbohrung (8) unter einem Winkel (α) zur Bodenplatte (6) eingebracht ist.

12. Fertigungseinrichtung (44) nach einem der vorhergehenden Ansprüche, wobei der der Dosierplatte (10) zugewandte Durchmesser der Pulverauslassbohrung (8) größer ist als der Durchmesser einer Dosierbohrung (12).

13. Fertigungseinrichtung (44) nach einem der vorhergehenden Ansprüche,
**dadurch gekennzeichnet,**
**dass** mehrere verfahrbare Pulverauftragseinrichtungen (1, 20, 70) vorgesehen sind.

14. Fertigungseinrichtung (44) nach einem der vorhergehenden Ansprüche,
**dadurch gekennzeichnet,**
**dass** eine Steuereinheit (62) umfasst ist, die zum Heben und Senken der Hubeinheiten (46, 49), zum Verschieben der Rakel (53), zum Verfahren der oder jeder Pulverauftragseinrichtung (1, 20, 70) sowie zum Bewegen der Dosierplatte (6) eingerichtet ist.

## Claims

1. Production apparatus (44) for the generative production of a powder moulding, having a powder application level (45), extending in an x direction and a y direction, having a first lifting unit (46), lowered in relation to the powder application level (45) in a z direction and carrying a building platform (47), having a second lifting unit (49), lowered in relation to the powder application level (45) in the z direction and forming a base (50) of a powder chamber (51), having a doctor blade (53), arranged on the powder application level (45) and displaceable between the powder chamber (51) and the building platform (47), and having a radiation unit (55), for generating and directing radiation (56) onto the building platform (47), **characterized in that** at least one powder application device (1, 20, 70) that can be made to move with the powder outlet bore (8) over the building platform (47) in an x direction and/or a y direction is provided, having a powder storage chamber (3), for receiving a powder material (5), having a base plate (6), fixed in relation to said storage chamber and incorporating a powder outlet bore (8), having a dosing plate (10), which comprises a number of dosing bores (12), and having a wiper (9), acting against the dosing plate (10), the dosing plate (10) being movable with the at least one dosing bore (12) between the wiper (9) and the powder outlet bore (8).

2. Production apparatus (44) according to Claim 1, the dosing plate (10) being formed as a dosing disc (15), which is rotatable about an axis of rotation (28) and comprises a plurality of dosing bores (12) distributed along the circumferential direction.

3. Production apparatus (44) according to Claim 2, the dosing bores (12) being distributed at uniform angular intervals along the circumference of a full circle, and the powder outlet bore (8) also being arranged on this circumference.

4. Production apparatus (44) according to one of the preceding claims, the wiper (9) being arranged opposite the powder outlet bore (8).

5. Production apparatus (44) according to one of Claims 2 to 4, a cover unit (22), a base unit (24) and a storage unit (25) arranged in between being provided in a modular type of construction, at least the cover unit (22) and the storage unit respectively comprising a central clearance (30, 31), the central clearance (31) of the storage unit (25) comprising a first bore space (36), in which the dosing disc (15) is rotatably mounted, the powder storage chamber (3) being formed in the storage unit (25), a drive unit (35) that is connected to the dosing disc (15) penetrating through the central clearances (30, 31, 32) of the cover unit (22) and of the storage unit (25), and the powder outlet bore (8) being incorporated in the base unit (24).

6. Production apparatus (44) according to Claim 5, the storage unit (25) comprising as a powder storage chamber (3) a funnel space (72), opening out onto a portion (74) of the dosing disc (15), and an edge of the funnel space (72) being formed as a wiper (9) and acting against the dosing disc (15).

7. Production apparatus (44) according to Claim 5, the storage unit (25) comprising as a powder storage chamber (3) a second bore space (37), and there being formed between the first and the second bore space (36, 37) a radially inwardly directed wall (42), in which the wiper (9) is accommodated.

8. Production apparatus (44) according to one of the preceding claims, the dosing bores (12) having a diameter of between 50 and 500 µm.

9. Production apparatus (44) according to one of the preceding claims, the thickness of the dosing plate (10) being greater than 50 µm.

10. Production apparatus (44) according to one of the preceding claims, the powder outlet bore (8) being formed as a conical bore, with its greater diameter on the side facing the dosing plate (10).

11. Production apparatus (44) according to one of the preceding claims, the powder outlet bore (8) being incorporated at an angle (α) to the base plate (6).

12. Production apparatus (44) according to one of the preceding claims, the diameter of the powder outlet bore (8) that is facing the dosing plate (10) being greater than the diameter of a dosing bore (12).

13. Production apparatus (44) according to one of the preceding claims, **characterized in that** a number of movable powder application devices (1, 20, 70) are provided.

14. Production apparatus (44) according to one of the preceding claims, **characterized in that** a control unit (62) is comprised, designed for raising and lowering the lifting units (46, 49), for displacing the doctor blade (53), for moving the or each powder application device (1, 20, 70) and for moving the dosing plate (10).

## Revendications

1. Dispositif de fabrication (44) pour la fabrication additive d'une pièce moulée à partir de poudre avec un plan d'application de poudre (45) s'étendant dans une direction x et une direction y, avec une première unité de levage (46) renfoncée dans la direction z par rapport au plan d'application de poudre (45), portant une plate-forme de support (47), avec une deuxième unité de levage (49) renfoncée dans la direction z par rapport au plan d'application de poudre (45), formant un fond (50) d'un espace de poudre (51), avec une racle (53) disposée sur le plan d'application de poudre (45), déplaçable entre l'espace de poudre (51) et la plate-forme de support (47), et avec une unité de rayonnement (55) pour générer et orienter un rayonnement (56) sur la plate-forme de support (47),
**caractérisé en ce qu'**au moins un dispositif d'application de poudre (1, 20, 70) déplaçable dans la direction x et/ou y sur la plate-forme de support (47) avec l'alésage de sortie de poudre (8) est pourvu d'une chambre de stockage de poudre (3) pour recevoir un matériau pulvérulent (5), d'une plaque de fond (6) fixée à celle-ci, dans laquelle est pratiqué un alésage de sortie de poudre (8), d'une plaque de dosage (10) qui comprend une pluralité d'alésages de dosage (12), et d'un racloir (9) agissant contre la plaque de dosage (10), la plaque de dosage (10) pouvant être déplacée avec l'au moins un alésage de dosage (12) entre le racloir (9) et l'alésage de sortie de poudre (8).

2. Dispositif de fabrication (44) selon la revendication 1, dans lequel la plaque de dosage (10) est réalisée sous forme de plateau de dosage (15) pouvant tourner autour d'un axe de rotation (28), lequel plateau comprend une pluralité d'alésages de dosage (12) répartis le long de la direction périphérique.

3. Dispositif de fabrication (44) selon la revendication 2, dans lequel les alésages de dosage (12) sont répartis avec un espacement angulaire uniforme le long de la périphérie d'un cercle complet, et dans lequel l'alésage de sortie de poudre (8) est également disposé sur cette périphérie.

4. Dispositif de fabrication (44) selon l'une quelconque des revendications précédentes, dans lequel le racloir (9) est disposé en face de l'alésage de sortie de poudre (8).

5. Dispositif de fabrication (44) selon l'une quelconque des revendications 2 à 4, dans lequel une unité de couvercle (22), une unité de fond (24) et une unité de stockage (25) disposée entre elles sont prévues suivant une construction modulaire, au moins l'unité de couvercle (22) et l'unité de stockage comprenant chacune un évidement central (30, 31), l'évidement central (31) de l'unité de stockage (25) comprenant un premier espace d'alésage (36) dans lequel est monté à rotation le plateau de dosage (15), la chambre de stockage de poudre (3) étant réalisée dans l'unité de stockage (25), une unité d'entraînement (35) connectée au plateau de dosage (15) traversant les évidements centraux (30, 31, 32) de l'unité de couvercle (22) et de l'unité de stockage (25), et l'alésage de sortie de poudre (8) étant pratiqué dans l'unité de fond (24).

6. Dispositif de fabrication (44) selon la revendication 5, dans lequel l'unité de stockage (25) comprend en tant que chambre de stockage de poudre (3) un espace de trémie (72) débouchant sur une portion (74) du plateau de dosage (15), et une arête de l'espace de trémie (72) étant réalisée sous forme de racloir (9) et agissant contre le plateau de dosage (15).

7. Dispositif de fabrication (44) selon la revendication 5, dans lequel l'unité de stockage (25) comprend en tant que chambre de stockage de poudre (3) un deuxième espace d'alésage (37), et une paroi (42) orientée radialement vers l'intérieur étant formée entre le premier et le deuxième espace d'alésage (36, 37), dans laquelle paroi est reçu le racloir (9).

8. Dispositif de fabrication (44) selon l'une quelconque des revendications précédentes, dans lequel les alésages de dosage (12) présentent un diamètre compris entre 50 et 500 µm.

9. Dispositif de fabrication (44) selon l'une quelconque des revendications précédentes, dans lequel l'épaisseur de la plaque de dosage (10) est supérieure à 50 µm.

10. Dispositif de fabrication (44) selon l'une quelconque des revendications précédentes, dans lequel l'alésage de sortie de poudre (8) est réalisé sous forme d'alésage conique avec son plus grand diamètre sur le côté tourné vers la plaque de dosage (10).

11. Dispositif de fabrication (44) selon l'une quelconque des revendications précédentes, dans lequel l'alésage de sortie de poudre (8) est pratiqué suivant un angle (α) par rapport à la plaque de fond (6).

12. Dispositif de fabrication (44) selon l'une quelconque des revendications précédentes, dans lequel le diamètre de l'alésage de sortie de poudre (8) tourné vers la plaque de dosage (10) est supérieur au diamètre d'un alésage de dosage (12).

13. Dispositif de fabrication (44) selon l'une quelconque des revendications précédentes, **caractérisé en ce que** plusieurs dispositifs d'application de poudre déplaçables (1, 20, 70) sont prévus.

14. Dispositif de fabrication (44) selon l'une quelconque des revendications précédentes, **caractérisé en ce qu'**une unité de commande (62) est comprise, laquelle est prévue pour soulever et abaisser les unités de levage (46, 49), pour déplacer la racle (53), pour déplacer le ou chaque dispositif d'application de poudre (1, 20, 70), et pour déplacer la plaque de dosage (10).
